# FASCICULE DE BREVET EUROPEEN

(11) **EP 0 332 504 B1**
(45) Date de publication et mention de la délivrance du brevet: **26.05.1993**
(21) Numéro de dépôt: 89400569.3
(22) Date de dépôt: 01.03.1989
(51) Int. Cl.: G06F 7/52

(54) **Procédé pour déterminer la structure d'un multiplieur cellulaire en arbre, dit en racine P.ième**
Verfahren zur Bestimmung der Struktur eines baumförmigen Zellenmultiplizierers, genannt in der p-ten Wurzel
Method for determining the structure of a cellular tree multiplier, called P.th root structure

(30) Priorité: 03.03.1988 FR 8802701
(43) Date de publication de la demande: 13.09.1989
(73) Titulaire: FRANCE TELECOM, 75015 Paris (FR)
(72) Inventeur: Jutand, Francis, F-94230 Cachan (FR); Montperrus, Luc, F-75013 Paris (FR)
(74) Mandataire: Dubois-Chabert, Guy

(56) Documents cités:
- 1986 IEEE INTERNATIONAL SOLID-STATE CIRCUITS CONFERENCE, Digest of Technical Papers, février 1986, édition 1, pages 34-35,294-295, Lewis Winner, Coral Gables, FL, US; W.M. McALLISTER et al.: "An NMOS 64b floating-point chip set"

## Description

La présente invention concerne un procédé pour déterminer la structure d'un multiplieur cellulaire en arbre, dit en racine p^{ième}.

Ce multiplieur est capable d'additionner des opérandes correspondant respectivement à des produits partiels résultant de la multiplication de deux nombres binaires, par exemple à l'aide de circuits logiques utilisant des portes de type "ET". De façon connue, un arbre en racine p^{ième} est un arbre dont la complexité du temps de calcul de la sommation des opérandes correspondant aux produits partiels, varie selon la racine p^{ième} du nombre d'opérandes correspondant à ces produits partiels. Une structure en arbre en racine p^{ième} comporte de façon connue, des additionneurs à reports bloqués (en anglais Carry Save adders). Chaque additionneur permet de réduire trois opérandes reçus respectivement sur trois entrées et correspondant à des produits partiels à additionner, ou à des opérandes de sommation et de report fournis par d'autres additionneurs, en deux opérandes fournis respectivement sur deux sorties. L'un des opérandes fournis sur une sortie correspond à une somme intermédiaire de produits partiels, l'autre opérande fourni sur une autre sortie, correspond à un report ou retenue.

Des additionneurs à reports bloqués et des multiplieurs en arbre sont décrits par exemple dans le livre intitulé "Circuits logiques de traitement numérique de l'information" par J. CHINAL, Editions CEPADUES 1979, pages 405 à 463.

Un multiplieur présentant une structure en arbre en racine carrée est plus précisément décrit dans l'article de W.M. Mc ALLISTER et D. ZURES de la revue IEEE, 19 février 1986, pages 34 et 35.

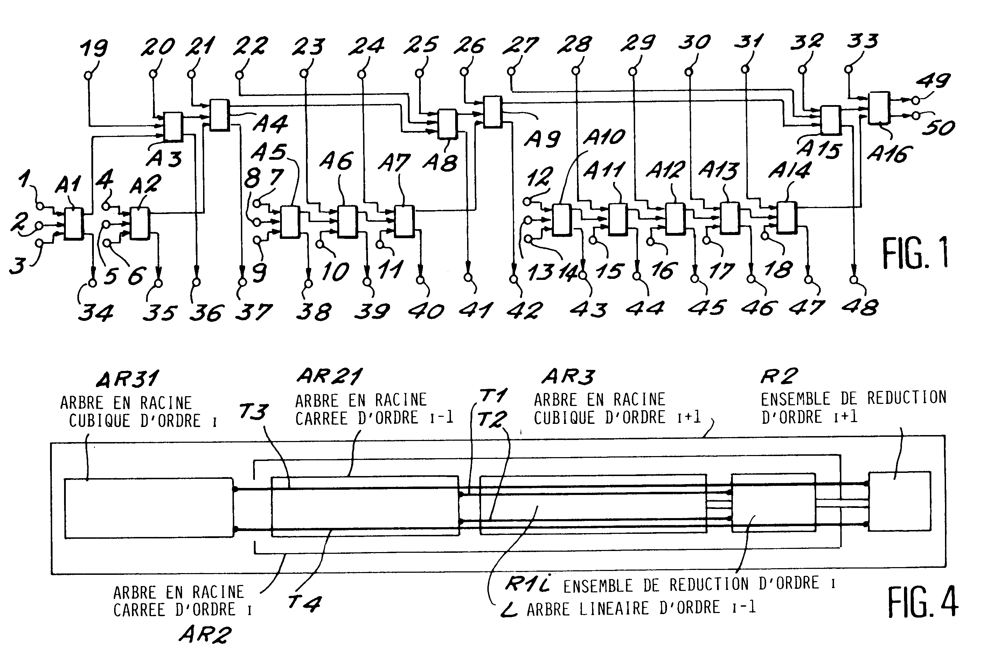

La figure 1 annexée représente un étage arborescent du multiplieur en racine carrée décrit dans cette revue, qualifié d'arbre de type "pseudo-Wallace". Le multiplieur représenté sur cette figure est l'un des étages d'un ensemble de multiplieurs. Il comporte une succession d'additionneurs A1, A2,... A16 de type "à report bloqué" disposés en ligne dans chaque succession. Chaque additionneur comporte trois entrées et deux sorties. Des entrées 1, 2, 3,... 18 de ces additionneurs reçoivent des opérandes résultant de produits partiels de multiplication de deux nombres binaires, tandis que d'autres entrées 19, 20,.... 33 de ces additionneurs reçoivent des opérandes de sommation ou de report fournis par des sorties d'additionneurs d'un étage précédent. Des sorties 34, 35,... 48 de ces additionneurs fournissent des opérandes qui sont transmis à l'étage suivant. Deux sorties globales 49, 50 de l'étage considéré fournissent un opérande résultant de la sommation par cet étage, des opérandes reçus sur les différentes entrées, et un opérande de report global pour cet étage.

Un additionneur tel que l'additionneur A1 par exemple reçoit respectivement sur ses entrées 1, 2, 3, trois opérandes résultant de produits partiels de la multiplication de deux nombres. Ces trois opérandes sont réduits en deux opérandes, l'un de report, l'autre de sommation qui sont respectivement fournis sur deux sorties et qui sont appliqués à une entrée d'un additionneur de l'étage suivant et à une entrée de l'additionneur A3 du même étage.

De la même manière, l'additionneur A4, par exemple, réduit trois opérandes reçus respectivement des additionneurs A2 et A3 et d'un additionneur d'un étage précédent en deux opérandes, l'un de somme appliqué à une entrée de l'additionneur A8, l'autre de report, appliqué à une entrée d'un additionneur d'un étage suivant. Si T désigne le temps nécessaire à un additionneur pour effectuer la réduction de trois opérandes en deux opérandes, l'étage de multiplieur décrit dans cette revue effectue le calcul d'addition des 18 opérandes reçus sur les entrées 1 à 18 en un temps τ=7T. La complexité du temps de calcul de sommation est proportionnelle à la racine carrée du nombre de produits partiels à additionner, comme expliqué dans cette revue et de manière connue dans l'état de la technique.

D'une manière générale, les arbres en racine p^{ième} présentent de bonnes performances en rapidité de temps de calcul, et la surface de substrat de silicium occupée pour la réalisation de tels arbres est acceptable, à condition que ces arbres soient structurés de manière judicieuse pour que les interconnexions entre les additionneurs n'augmentent pas les temps de calcul et n'accroîssent pas la surface de substrat occupé.

La surface de substrat de silicium occupée par des additionneurs n'est pas minimale lorsque les additionneurs forment des successions linéaires décalées les unes par rapport aux autres. Ce décalage résulte du fait que les deux sorties d'opérandes de sommation et de report d'une succession sont reliées à des entrées d'un autre additionneur d'une autre succession par des liaisons qui ne traversent pas ces additionneurs.

Il serait possible d'éviter ce décalage en faisant traverser une succession d'additionneurs par ces liaisons, de manière à obtenir un arbre totalement linéaire.

Il serait alors nécessaire de définir une transparence qui, dans un arbre totalement linéaire, est le nombre de liaisons nécessaires à l'acheminement d'un opérande provenant d'une succession d'additioneurs de cet arbre, à travers les additionneurs d'une autre succession d'additionneurs de cet arbre. La transmission de deux opérandes correspond alors à deux transparences.

Ce nombre de transparences s'accroît notablement pour des arbres complexes en racine p^{ième}, pour lesquels p présente une valeur élevée.

Aucun procédé ne permet actuellement de déterminer de façon simple, la structure d'un multiplieur cellulaire en arbre, en racine p^{ième}.

Il n'existe pas non plus de procédé qui permette de prévoir simplement le nombre maximum de transparences d'un multiplieur en arbre en racine p^{ième}, implanté sous forme linéaire et récursive présentant des performances de vitesse de calcul de sommation acceptables tout en occupant une surface minimale.

L'invention a précisément pour but de remédier à ces inconvénients et notamment de fournir un procédé permettant de déterminer la structure d'un multiplieur en arbre, en racine p^{ième}, et de prévoir le nombre de transparences que présente cette structure lorsque les additionneurs qui la composent sont alignés.

L'invention a pour objet un procédé pour déterminer la structure d'un multiplieur cellulaire en arbre, dit en racine p^{ième}, ce multiplieur étant capable de calculer la sommation des opérandes correspondant à des produits partiels résultant de la multiplication de deux nombres binaires, un arbre en racine p^{ième} étant un arbre dont la complexité du temps de calcul de sommation des opérandes correspondant aux produits partiels est proportionnelle à la racine p^{ième} du nombre d'opérandes correspondant aux produits partiels, cette structure en arbre comportant des additionneurs A1,... A16 à reports bloqués, chaque additionneur réduisant trois opérandes reçus respectivement sur trois entrées et correspondant soit à des produits partiels ou à des opérandes fournis par d'autres additionneurs ou encore à une combinaison des deux, en deux opérandes fournis respectivement sur deux sorties et correspondant à un report et à un résultat de sommation, des additionneurs de cet arbre étant groupés par paires, chaque paire R1 ou R'1 ou ... R3 formant un ensemble de réduction à quatre entrées et étant capable de réduire quatre opérandes respectivement reçus sur ces quatre entrées 60, 61, 62, 63 en deux opérandes respectivement fournis sur deux sorties 64, 65, un arbre fournissant respectivement sur deux sorties, deux opérandes, l'un de somme des produits partiels de multiplication, l'autre de report, caractérisé en ce qu'il consiste à constituer un arbre AR3 en racine p^{ième} d'ordre n en connectant respectivement les quatre entrées d'un ensemble de réduction R3, aux deux sorties d'un arbre AR2 en racine p^{ième} d'ordre n-1 et aux deux sorties d'un arbre AR1 en racine (p-1)^{ième} d'ordre n-1, en qualifiant un arbre d'ordre i un arbre appartenant à l'ensemble des arbres qui fournissent deux opérandes de sortie a un même instant.

Selon une autre caractéristique de l'invention, le procédé consiste en outre à construire un arbre en racine p^{ième} d'ordre n, par la mise en succession linéaire, respectivement dans le sens de propagation du calcul de sommation, de l'arbre AR2 en racine p^{ième} d'ordre n-1, de l'arbre AR1 en racine (p-1)^{ième} d'ordre n-1, et de l'ensemble de réduction R3 relié aux sorties de ces arbres, et ainsi de suite, de façon récursive pour les arbres construits à partir des deux arbres précédemment obtenus, cette mise en succession linéaire nécessitant de réserver à travers les additionneurs de l'arbre en racine (p-1)^{ième} d'ordre n-1, deux transparences, une transparence à travers un arbre étant le nombre de liaisons nécessaires pour l'acheminement d'un opérande à travers cet arbre, l'arbre en racine p^{ième} d'ordre n étant ainsi construit avec un nombre maximum de transparences égal à 2(p-1).

Les caractéristiques et avantages de l'invention ressortiront mieux de la description qui va suivre, donnée en référence aux dessins annexés dans lesquels :
- la figure 1, déjà décrite, représente schématiquement l'implantation des additionneurs sur un substrat semi-conducteur, pour un multiplieur cellulaire en arbre en racine carrée, connu dans l'état de la technique,
- la figure 2 représente le multiplieur de la figure 1 de manière schématique plus conventionnelle, et permet de mieux comprendre le procédé de l'invention,
- la figure 3 représente de manière schématique conventionnelle, un multiplieur en arbre, en racine cubique ; cette figure permet de vérifier l'exactitude du procédé de détermination de structure de multiplieur en arbre, conforme à l'invention, et
- la figure 4 est un schéma d'un multiplieur en arbre, en racine cubique, implanté sous forme linéaire. Ce schéma permet de mieux comprendre la définition des transparences dans un arbre linéaire constituant un multiplieur en racine p^{ième}.

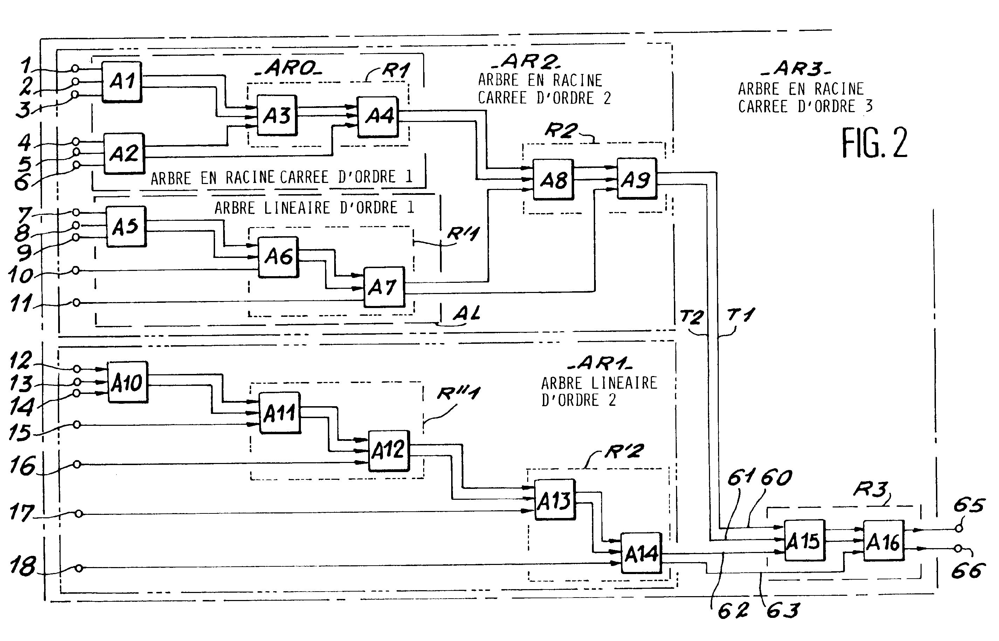

La figure 2 représente schématiquement et de manière plus conventionnelle, l'étage du multiplieur en arbre en racine carrée, de la figure 1. Les mêmes éléments portent les mêmes références sur cette figure et sur la figure 1. On suppose toutefois, que pour des commodités de représentation et des facilités de compréhension, les deux sorties de chaque additionneur sont connectées respectivement aux deux entrées d'un additionneur du même étage. La démonstration qui va être faite à partir de la figure 2 pour expliquer le procédé de l'invention n'est pas entamée par cette disposition simplifiée des connexions.

On remarque sur cette figure ainsi que sur la figure 1, que les deux additionneurs A15 et A16 forment une paire R3 qui peut être qualifiée "d'ensemble de réduction". Cet ensemble de réduction fournit sur ses deux sorties 49, 50 deux opérandes, l'un de sommation globale des opérandes 1 à 19 représentant les produits partiels à additionner, l'autre de report de retenue. Ces opérandes sont la réduction de quatre opérandes reçus respectivement sur quatre entrées 60, 61, 62, 63. L'arbre représenté est un arbre en racine carrée dans lequel chaque additionneur réduit trois opérandes reçus respectivement sur trois entrées, en deux opérandes de sommation et de report, fournis respectivement sur deux sorties.

D'autres paires d'additionneurs apparaissent d'ailleurs sur la figure et constituent des ensembles de réduction R2 (paire d'additionneurs A8, A9), R'2 (paire d'additionneurs A13, A14), R1 (paire d'additionneurs A3, A4), R'1 (paire d'additionneurs A6, A7) et R''1 (paire d'additionneurs A13, A14). On peut établir une hiérarchie des ensembles de réduction en qualifiant d'ensembles de réduction d'ordre 1, les premiers ensembles R1, R'1, R''1 qui fournissent respectivement deux opérandes à un même instant (3T, si T est le temps de calcul pour un additionneur), d'ensembles de réduction d'ordre 2, les ensembles R'2, R'' (qui fournissent respectivement deux opérandes à un même autre instant 5T), et d'ensembles de réduction d'ordre 3, l'ensemble R3 (qui fournit deux opérandes à un autre instant 7T). L'arbre en racine carrée AR3 représenté sur cette figure peut alors être qualifié d'arbre en racine carrée d'ordre 3. Cet arbre est constitué par un arbre AR2 en racine carrée d'ordre 2 (car sa structure est celle d'un arbre en racine carrée et que le dernier ensemble de réduction est d'ordre 2), et d'un arbre AR1 en racine 1^{ième} (ou arbre linéaire, car constitué d'additionneurs en cascade) d'ordre 2 (car le dernier ensemble de réduction est d'ordre 2). Les arbres AR2 et AR1 présentent chacun deux sorties qui sont respectivement connectées aux quatre entrées 60, 61, 62, 63 de l'ensemble de réduction final d'ordre 3. Ces quatres opérandes sont réduits en deux opérandes fournis sur les sorties 65, 66.

Un raisonnement récursif permet donc d'affirmer qu'un arbre en racine p^{ième} d'ordre n est constitué par un arbre en racine p^{ième} d'ordre n-1 et d'un arbre en racine p-1^{ième} d'ordre n-1, les deux sorties respectives de ces deux arbres étant respectivement reliées aux quatre entrées d'un ensemble de réduction final. Cette formulation peut d'ailleurs être vérifiée sur l'arbre AR2 en racine carrée d'ordre 2. Cet arbre est constitué par un arbre AR0 en racine d'ordre 1 (l'ensemble de réduction final R1 de l'arbre AR0 étant d'ordre 1) et d'un arbre AL en racine 1^{ième} d'ordre 1 (l'ensemble de réduction final R'1 étant d'ordre 1). En fait, l'arbre AL est un arbre linéaire d'ordre 1 constitué par un ensemble de réduction d'ordre 1 et d'un additionneur.

L'arbre AR1 est un arbre linéaire d'ordre 2 qui comprend un ensemble de réduction d'ordre 1 et un additionneur.

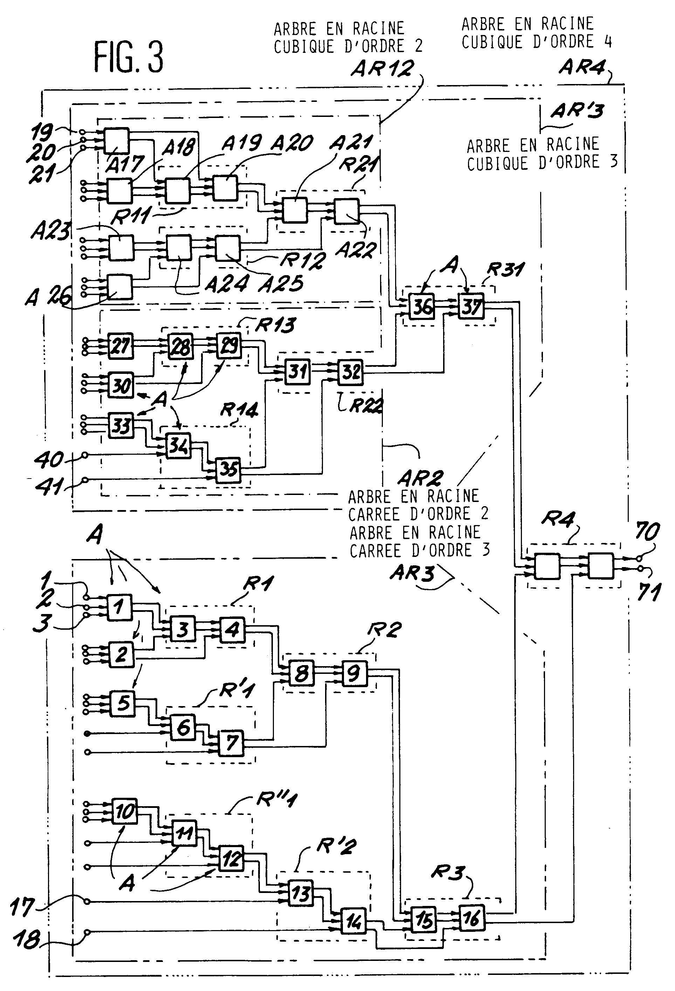

Le procédé de détermination de structure de multiplieur en arbre en racine p^{ième}, peut encore être vérifié à l'aide de la figure 3 qui représente schématiquement un arbre AR4 en racine cubique d'ordre 4. Les opérandes résultant de résultats partiels de multiplication et qui sont à additionner, sont appliqués sur les entrées 1 à 41 de cet arbre. Cet arbre présente deux sorties 70, 71 qui fournissent deux opérandes ; l'un de ces opérandes est le résultat du calcul de sommation effectué par cet arbre, l'autre opérande est un report de retenue. Cet arbre comporte un ensemble de réduction R4 d'ordre 4. Il est donc constitué par deux arbres dont les sorties sont respectivement reliées aux quatres entrées de cet ensemble de réduction. Cet arbre étant en racine cubique, on a p=3, lt étant d'ordre 4, on a n=4. Les deux arbres AR'3 et AR3 qui le constituent sont donc un arbre AR'3 en racine p^{ième} d'ordre n-1, donc un arbre en racine cubique d'ordre 3, et un arbre AR3 en racine (p-1)ième d'ordre n-1, donc un arbre en racine carrée d'ordre 2. L'arbre AR3 a été décrit à la figure précédente. L'arbre AR'3 en racine cubique (p=3) d'ordre 2 (n=2) comporte deux arbres AR12 et AR2 dont les sorties sont respectivement reliées aux quatre entrées de l'ensemble de réduction R31 d'ordre 3.

L'arbre AR12 est donc un arbre en racine cubique (car p=3), d'ordre 2 (car n-1=3-1=2) et l'arbre AR2 est un arbre en racine carrée (car p-1=3-1=2), d'ordre 2 (car n-1=3-1=2).

Sur cette figure on a désigné par A17, A18,... A37 les différents additionneurs de l'arbre AR'3 en racine cubique d'ordre 4. Les ensembles de réduction de l'arbre AR'3 sont désignés par R11, R12, R13, R14, pour l'ordre 1, par R21, R22, pour l'ordre 2, et par R31 pour l'ordre 3.

La figure 4 permet de mieux comprendre la construction d'un arbre en racine p^{ième} d'ordre n, par la mise en succession linéaire des additionneurs de cet arbre ; cette figure montre notamment comment est déterminé le nombre de transparences d'un arbre ainsi construit.

Comme indiqué pécédemment, un arbre en racine p^{ième} d'ordre n peut être construit à partir d'un arbre en racine p^{ième} d'ordre n-1 est d'un arbre en racine (p-1)^{ième} d'ordre n-1, ces deux arbres étant reliés à un ensemble de réduction final. Si on souhaite construire l'arbre en adoptant une structure récursive, on peut alors, à partir des deux arbres ainsi obtenus, en racine p^{ième} d'ordre n-1 et en racine (p-1)^{ième} d'ordre n-1, construire chacun d'eux à partir de deux arbres :
- un arbre en racine (p-1)^{ième} d'ordre n-2 et un arbre en racine (p-1)^{ième} d'ordre n-2 pour l'arbre en racine p^{ième} d'ordre n-1, reliés à un ensemble de réduction final,
- un arbre en racine (p-1)^{ième} d'ordre n-2 et un arbre en racine (p-2)^{ième} d'ordre n-2 pour l'arbre en racine (p-1)^{ième} d'ordre n-1, reliés par un ensemble de réduction final.

Ce raisonnement récursif peut être répété pour les quatre nouveaux arbres ainsi obtenus et ainsi de suite.

Si on considère par exemple l'arbre de racine carrée d'ordre 3 représenté sur la figure 2, cet arbre s'il est implanté linéairement, présent deux transparences (chaque transparence étant le nombre de liaisons nécessaires pour l'acheminement d'un opérande à travers cet arbre). En effet, cet arbre en racine carrée d'ordre 3, comprend un premier groupe d'additionneurs A1, A2,... A9 constituant l'arbre AR2 en racine carrée d'ordre 2 qui peuvent être alignés, et un deuxième groupe d'additionneurs A10,... A14 constituant l'arbre linéaire AR1 d'ordre 2, et qui peuvent être alignés. Si on souhaite aligner ces deux groupes, pour les connecter à l'ensemble de réduction de sortie R3, il est nécessaire que les liaisons T1, T2 qui acheminent les opérandes de sorties de l'ensemble de réduction R2, vers l'ensemble de réduction R3, traversent les additionneurs de l'arbre AR1.

L'arbre en racine carrée représenté sur cette figure présente donc deux transparences.

Ce raisonnement peut être répété pour un arbre en racine cubique d'ordre n, que l'on souhaite disposer sous forme linéaire. Cet arbre en racine cubique est formé d'un arbre en racine cubique d'ordre n-1 et d'un arbre en racine carrée, d'ordre n-1 reliés à un ensemble de réduction de sortie. Il y a donc ici aussi, deux transparences supplémentaires. Si ces deux arbres et leur ensemble de réduction sont alignés, ces deux transparences représentent chacune le nombre de liaisons pour acheminer chaque opérande de sortie de l'arbre en racine cubique d'ordre n-1, à travers l'arbre en racine carrée d'ordre n-1. Ces deux transparences s'ajoutent aux deux transparences déjà existantes pour l'arbre en racine carrée. Ceci porte à quatre le nombre de transparences pour un arbre en racine cubique. Un même raisonnement montrerait que le nombre de transparences est de six pour un arbre en racine quatrième, de 8 pour un arbre en racine cinquième, etc. D'une façon générale, le nombre maximum de transparences pour un arbre en racine p^{ième} construit de façon récursive et implanté linéairement est donc égal à 2(p-1).

La figure 4 schématise les transparences en traits forts. Les deux transparences de l'arbre AR2 en racine carrée d'ordre i sont désignées par T1 et T2. Cet arbre est lui-même constitué par un arbre AR21 en racine carrée d'ordre i-1 et d'un arbre linéaire L, reliés à l'ensemble de réduction final R1i. L'arbre AR3 en racine cubique d'ordre i+1 est lui-même constitué par un arbre AR31 en racine cubique d'ordre i et de l'arbre en racine carrée AR2 précédent d'ordre i, reliés à l'ensemble de réduction R2i+1, d'ordre i+1. Deux transparences supplémentaires T3 et T4 sont nécessaires pour acheminer les opérandes de sortie de l'arbre AR31 à travers l'arbre AR2, vers l'ensemble de réduction R2. Cette récursivité peut être répétée de la même façon jusqu'à l'obtention d'un arbre en racine p^{ième} d'ordre n.

## Revendications

1. Procédé pour déterminer la structure d'un multiplieur cellulaire en arbre, dit en racine p^{ième}, ce multiplieur étant capable de calculer la sommation des opérandes correspondant à des produits partiels résultant de la multiplication de deux nombres binaires, un arbre en racine p^{ième} étant un arbre dont la complexité du temps de calcul de sommation des opérandes correspondant aux produits partiels est proportionnelle à la racine p^{ième} du nombre d'opérandes correspondant aux produits partiels, cette structure en arbre comportant des additionneurs (A1,... A16) à reports bloqués, chaque additionneur réduisant trois opérandes reçus respectivement sur trois entrées et correspondant soit à des produits partiels ou à des opérandes fournis par d'autres additionneurs ou encore à une combinaison de deux, en deux opérandes fournis respectivement sur deux sorties et correspondant à un report et à un résultat de sommation, des additionneurs de cet arbre étant groupés par paires, chaque paire (R1 ou R'1 ou ... R3) formant un ensemble de réduction à quatre entrées et étant capable de réduire quatre opérandes respectivement reçus sur ces quatre entrées (60, 61, 62, 63) en deux opérandes respectivement fournis sur deux sorties (64, 65), un arbre fournissant respectivement sur deux sorties, deux opérandes, l'un de somme des produits partiels de multiplication, l'autre de report, caractérisé en ce qu'il consiste à constituer un arbre (AR3) en racine p^{ième} d'ordre n en connectant respectivement les quatre entrées d'un ensemble de réduction (R3), aux deux sorties d'un arbre (AR2) en racine p^{ième} d'ordre n-1 et aux deux sorties d'un arbre (AR1) en racine (p-1)^{ième} d'ordre n-1, en qualifiant un arbre d'ordre i un arbre appartenant à l'ensemble des arbres qui fournissent deux opérandes de sortie à un même instant.

2. Procédé selon la revendication 1, caractérisé en ce qu'il consiste à construire un arbre en racine p^{ième} d'ordre n, par mise en succession linéaire, respectivement dans le sens de propagation du calcul de sommation, de l'arbre (AR2) en racine p^{ième} d'ordre n-1, de l'arbre (AR1) en racine (p-1)^{ième} d'ordre n-1, et de l'ensemble de réduction (R3) relié aux sorties de ces arbres, et ainsi de suite, de façon récursive pour les arbres construits à partir des deux arbres précédemment obtenus, cette mise en succession linéaire nécessitant de réserver à travers les additionneurs de l'arbre en racine (p-1)^{ième} d'ordre n-1, deux transparences, une transparence à travers un arbre étant le nombre de liaisons nécessaires pour l'acheminement d'un opérande à travers cet arbre, l'arbre en racine p^{ième} d'ordre n étant ainsi construit avec un nombre maximum de transparences égal à 2(p-1).

## Patentansprüche

1. Verfahren zum Bestimmen der Struktur eines zellulären Multiplizierers in Form eines Baumes sogenannter p-ter Wurzel, wobei dieser Multiplizierer in der Lage ist, die Summe von Operanden zu berechnen, die Teilprodukten entsprechen, die aus der Multiplikation zweier binärer Zahlen resultieren, wobei ein Baum p-ter Wurzel ein Baum ist, dessen Komplexität für die Rechenzeit für die Summierung der den Teilprodukten entsprechenden Summanden proportional der p-ten Wurzel der Anzahl der den Teilprodukten entsprechenden Operanden ist, wobei die Baumstruktur Addierer (A1, ..., A16) in blockweiser Aufteilung aufweist, wobei jeder Addierer drei jeweils auf drei Eingängen erhaltene Operanden, die entweder Teilprodukten entsprechen oder Operanden entsprechen, die von anderen Addierern erzeugt werden, oder einer Kombination beider entsprechen, auf zwei jeweils auf zwei Ausgängen ausgegebene Operanden reduziert, die einem Verhältnis und einem Addierergebnis entsprechen, wobei Addierer dieses Baumes paarweise gruppiert sind, wobei jedes Paar (R1 oder R'1 oder ... R3) eine Reduktionseinheit mit vier Eingängen bildet und in der Lage ist, vier jeweils auf diesen vier Eingängen (60, 61, 62, 63) erhaltene Operanden auf jeweils auf zwei Ausgängen (64, 65) ausgegebene Operanden zu reduzieren, wobei ein Baum jeweils auf zwei Ausgängen zwei Operanden liefert, der eine für die Summe der Teilprodukte der Multiplikation und der andere für das Verhältnis, dadurch gekennzeichnet, daß es darin besteht, einen Baum (AR3) p-ter Wurzel der Ordnung n zu bilden, indem man jeweils die vier Eingänge einer Reduktionsanordnung (R3) mit den zwei Ausgängen eines Baumes (AR2) p-ter Wurzel der Ordnung n-1, wobei man als Baum der Ordnung i einen Baum bezeichnet, der zu einer Gruppe von Bäumen gehört, die zwei Ausgangsoperanden zu einem Zeitpunkt erzeugen, und den beiden Ausgängen eines Baumes (AR1) p-1-ter Wurzel der Ordnung n-1 verbindet, wobei man als Baum der Ordnung i einen Baum bezeichnet, der zu einer Gruppe von Bäumen gehört, die zwei Ausgangsoperanden zu einem Zeitpunkt erzeugen.

2. Verfahren nach Anspruch 1, dadurch gekennzeichnet, daß es darin besteht, einen Baum p-ter Wurzel der Ordnung n zu erzeugen, indem man jeweils in der Propagationsrichtung der Summenberechnung den Baum (AR2) p-ter Wurzel der Ordnung n-1, den Baum (AR1) p-1-ter Wurzel der Ordnung n-1 und die mit den Ausgängen dieser Bäume verbundene Reduktionsanordnung (R3) und so weiter auf rekursive Weise für die aus den zuvor erhaltenen beiden Bäumen konstruierten Bäume linear anordnet, wobei diese lineare Anordnung erfordert, durch die Addierer des Baumes p-1-ter Wurzel der Ordnung n-1 zwei Transparenzen hindurch zu reservieren, wobei eine Transparenz durch einen Baum hindurch die Anzahl der notwendigen Verbindungen für die Durchführung eines Operanden durch diesen Baum hindurch ist, wobei der Baum p-ter Wurzel der Ordnung n somit mit einer maximalen Zahl von Transparenzen gleich 2(p-1) konstruiert ist.

## Claims

1. Method for determining the structure of a cellular tree multiplier known as "radix p", said multiplier being capable of calculating the sum of operands corresponding to partial products resulting from the multiplication of two binary numbers, a radix p tree being a tree wherein the complexity of calculation time for the sum of the operands corresponding to the partial products is proportionate to radix p of the number of operands corresponding to the partial products, said tree structure comprising carry-save adders (A1, ... A16), each adder reducing three operands respectively received at three inputs and corresponding either to the partial products or to operands furnished by other adders or even a combination of both, into two operands respectively furnished at two outputs and corresponding to a carry and an addition result, some adders of the tree being grouped in pairs, each pair (R1 or R'1 or ...R3) forming a unit of reduction with four inputs and being capable of reducing four operands respectively received at said four inputs (60, 61, 62, 63) to two operands respectively furnished at two outputs (64, 65), one tree furnishing, respectively at two outputs, two operands, one being the sum of the partial products of multiplication, the other the carry, characterized in that it consists of constituting a radix p tree (AR3) of order n respectively by connecting the four inputs of a reduction unit (R3) to two outputs of a radix p tree (AR2) of order n-1 and to the two outputs of a radix (p-1) tree (AR1) of order n-1, calling an order i tree one which belongs to the plurality of trees supplying two output operands at the same instant.

2. Method according to claim 1, characterized by the fact that it consists of constructing a radix p tree of order n, by linear placement respectively in the direction of propagation of sum calculation, of the radix p tree of order n-1, of the radix (p-1 tree (AR1) of order n-1, and of the reduction unit (R3) connected to the tree outputs, and so forth, in recursive fashion for the tree constructed from the two tree previously obtained, said linear succession necessitating the reserve across the adders of the radix (p-1) tree of order n-1, two traversals, one traversal across said tree being the number of connections necessary to send an operand across said tree, the radix p tree of order n thus being constructed with a maximum number of traversals equal to 2(p-1).
